# EUROPEAN PATENT SPECIFICATION

(11) **EP 0 742 395 B1**
(45) Date of publication and mention of the grant of the patent: **30.09.1998**
(21) Application number: 96107410.1
(22) Date of filing: 09.05.1996
(51) Int. Cl.: F16H 61/20, F16H 61/06

(54) **Control device for an automatic transmission**
Steuereinrichtung für ein automatisches Getriebe
Dispositif de commande pour une transmission automatique

(30) Priority: 12.05.1995 JP 115011/95
(43) Date of publication of application: 13.11.1996
(73) Proprietor: AISIN AW CO., LTD., Anjo-shi Aichi-ken 444-11 (JP)
(72) Inventor: Iwata, Akihito, Anjo-shi, Aichi-ken, 441-11 (JP); Yamamoto, Yoshihisa, Anjo-shi, Aichi-ken, 441-11 (JP); Mikami, Kazuhiro, Anjo-shi, Aichi-ken, 441-11 (JP); Hayabuchi, Masahiro, Anjo-shi, Aichi-ken, 441-11 (JP)
(74) Representative: VOSSIUS & PARTNER

(56) References cited:
- EP-A- 0 392 732
- DE-A- 4 241 171
- GB-A- 2 158 912
- US-A- 4 730 708
- PATENT ABSTRACTS OF JAPAN vol. 011, no. 086 (M-572), 17 March 1987 & JP-A-61 238532 (NISSAN MOTOR CO LTD), 23 October 1986,
- PATENT ABSTRACTS OF JAPAN vol. 012, no. 052 (M-668), 17 February 1988 & JP-A-62 199541 (TOYODA AUTOM LOOM WORKS LTD;OTHERS: 01), 3 September 1987,
- PATENT ABSTRACTS OF JAPAN vol. 010, no. 295 (M-523), 7 October 1986 & JP-A-61 109963 (NISSAN MOTOR CO LTD), 28 May 1986,
- PATENT ABSTRACTS OF JAPAN vol. 015, no. 253 (M-1129), 27 June 1991 & JP-A-03 082638 (MAZDA MOTOR CORP), 8 April 1991,

## Description

The present invention relates to a control system for an automatic transmission.

In the prior art, the automatic transmission is provided with a torque converter acting as a fluid transmission unit for receiving the rotation generated by an engine, and a speed change unit for changing the speed of the rotation transmitted from the torque converter. The speed change unit is equipped with a planetary gear unit composed of a plurality of gear elements, so that it may change the speed in accordance with the shift pattern which is set in advance in a manner to correspond to a vehicle speed and a throttle opening.

The automatic transmission is enabled to select a P (parking) range, an R (reverse) range, an N (neutral) range, a D (drive) range, a 3rd (third) range, a 2nd (second) range, a 1st (low) range. When the range is shifted from the N-range to the D-range by the shift lever, for example, there arises the creep phenomenon, in which the rotation of the engine in the idling state is transmitted through the torque converter to the speed change unit so that the vehicle moves forward little by little even if the accelerator pedal is not depressed.

Therefore, while a range (as will be called the "forward running range") for the vehicle to run forward, such as the D-range, the 3rd range, the 2nd range or the 1st range is selected but the vehicle is substantially stopped, the aforementioned creep phenomenon is prevented by performing the neutral control to lower the oil pressure in the hydraulic servo of a first clutch thereby to bring the first clutch into a released state.

Incidentally in the automatic transmission described above, when the shift lever is operated to switch the range from the N-range to the forward running range, the ending of the neutral control is conditioned by the fact that the throttle opening exceeds a set value.

If, however, the throttle opening is to be detected by the degree of depression of the accelerator pedal by the driver, the detection of the depression is delayed to enlarge its error. As a result, the actual degree of depression is so increased that the clutch is not applied before the engine RPM rises, thus causing the application shock.

In order to prevent this application shock, therefore, the engine RPM is detected so that the neutral control is ended when the detected engine RPM exceeds a set value (as disclosed in Japanese Patent Laid-Open No. 238532/1986 (JP-A-61 238 532), which constitutes the closest prior art).

In the automatic transmission of the prior art, however, the neutral control is desired even in the idling state such as a warming-up operation or an air-conditioning operation (when in an idle-up), but the idling RPM rises. Therefore, the set value for ending the neutral control has to be higher than the idling RPM of at least the warming-up operation and the air-conditioning operation.

Thus, when the neutral control is to be ended in the ordinary idling state, the clutch is applied after the engine RPM is increased by the raised set value, so that the application shock cannot be sufficiently prevented.

The present invention has an object to solve the aforementioned problems of the control system for an automatic transmission of the prior art and to provide a control system for an automatic transmission, which is enabled to prevent the application shock by reducing the application of the clutch as much as possible.

Thus, according to a first aspect of the present invention, there is provided a control system for an automatic transmission, comprising: a fluid transmission unit for transmitting the rotation of an engine to a speed change unit; a clutch adapted to be applied when a forward running range is selected, to transmit the rotation of the fluid transmission unit to the transmission mechanism of the speed change unit; stop state detecting means for detecting stop state of a vehicle, in which a forward running range is selected, in which the throttle opening is fully closed, in which the brake pedal is depressed and in which the vehicle speed is substantially zero; engine RPM detecting means for detecting the engine RPM; application force generating means for generating the application force of the clutch; and a control unit.

Moreover, the control unit includes: release means for weakening the application force of the clutch, when the stop state of the vehicle is detected by the stop state detecting means, to release the clutch; storage means for storing the engine RPM detected by the engine RPM detecting means, as an initial engine RPM when the clutch is released by the released means; setting means for setting an end engine RPM on the basis of the initial engine RPM stored in the storage means; and application means for strengthening, while the clutch is released, the application force of the clutch to apply the clutch, if the stop state of the vehicle is not detected by the stop state detecting means, and for strengthening the application force of the clutch irrespective of the signal from the stop state detecting means, to apply the clutch if the engine RPM detected by the engine RPM detecting means exceeds the end engine RPM.

In another aspect of the control system for an automatic transmission, moreover, the release means weakens the application force of the clutch gradually, if the stop state of the vehicle is detected by the stop state detecting means, to shift the clutch gradually from an applied state to a released state, and wherein the setting means sets the engine RPM, while the clutch is being shifted from the applied state to the released state, as the initial engine RPM.

In still another aspect of the control system for an automatic transmission, moreover, the setting means sets the maximum engine RPM till the lapse of a set time after the establishment of the released state of the clutch has been started by the release means, as the initial engine RPM.

The present invention will be described in detail in the following in connection with its embodiments with reference to the accompanying drawings.
Fig. 1 is a functional block diagram of a control system for an automatic transmission in a first embodiment of the present invention;
Fig. 2 is a schematic diagram of an automatic transmission in the first embodiment of the present invention;
Fig. 3 is a table enumerating the operations of the automatic transmission in the first embodiment of the present invention;
Fig. 4 is a hydraulic circuit diagram showing an essential portion of a hydraulic control unit in the first embodiment of the present invention;
Fig. 5 is a time chart of the automatic transmission control system in the first embodiment of the present invention;
Fig. 6 is a flow chart illustrating the operations of the automatic transmission control system in the first embodiment of the present invention.
Fig. 7 is a time chart of an automatic transmission control system in a second embodiment of the present invention; and
Fig. 8 is a flow chart illustrating the operations of the automatic transmission control system in the second embodiment of the present invention.

In the drawing: reference numeral 10 designates an engine; numeral 12 a torque converter acting as a fluid transmission unit for transmitting the rotation of the engine 10 to a speed change unit 16; and characters C a clutch acting as a clutch to be applied, when a forward running range is selected, for transmitting the rotation from the torque converter 12 to the transmission mechanism of the speed change unit 16.

Moreover: reference numeral 41 designates an automatic transmission control unit acting as the control system; numeral 49 an engine RPM sensor acting as engine RPM detecting means for detecting the engine RPM; numeral 101 stop state detecting means for detecting the stop state of the vehicle, in which the forward running range is selected, in which the throttle opening is fully closed, in which the brake peal is depressed and in which the vehicle speed is substantially zero; and numeral 102 application force generating means for generating the force for applying the clutch C.

The automatic transmission control unit 41 includes: release means for releasing the clutch C by weakening the application force of the clutch C when the stop state of the vehicle is detected by the stop state detecting means 101; a memory 104 acting as storage means for storing the engine RPM, which is detected by the engine RPM sensor 49, as an initial engine RPM when the clutch C is released by the release means 103; setting means 105 for setting an end engine RPM on the basis of the initial engine RPM which is stored in the memory 104; and application means 106 for applying the clutch C, when this clutch C is released, by strengthening the application force of the clutch C if the stop state of the vehicle is not detected by the stop state detecting means 101, and for applying the clutch C by strengthening the application force of the clutch C independently of the signal coming from the stop state detecting means 101, if the engine RPM detected by the engine RPM sensor 49 exceeds the end engine RPM.

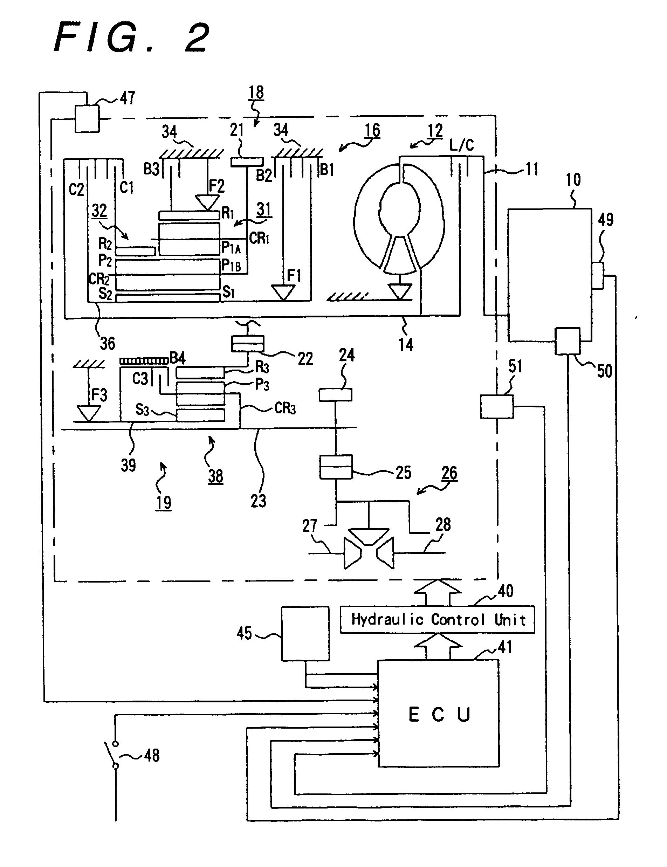

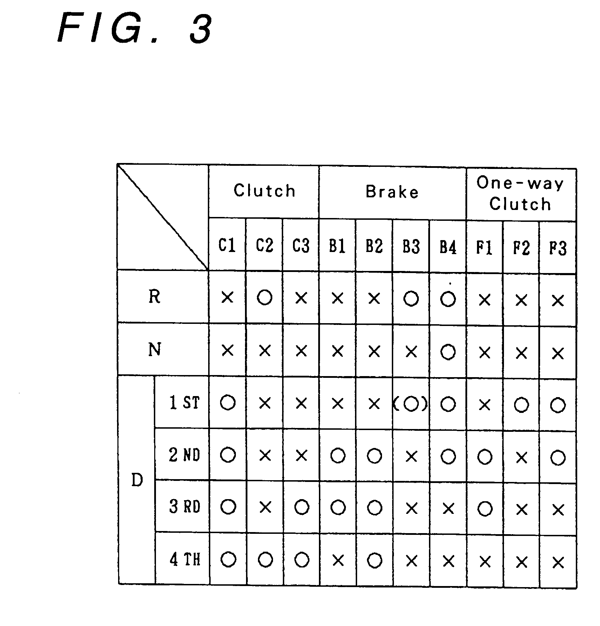

Fig. 2 is a schematic diagram of the automatic transmission in a first embodiment of the present invention, and Fig. 3 is a table enumerating the operations of the automatic transmission in the first embodiment of the present invention.

As shown, the rotation, as generated by the engine 10, is transmitted through an output shaft 11 to the torque converter 12. This torque converter 12 transmits the rotation of the engine 10 to an output shaft 14 through a fluid (or working oil) but is enabled to transmit the rotation directly to the output shaft 14, when the vehicle speed exceeds a predetermined value so that a lockup clutch L/C is applied.

To the output shaft 14, there is connected the speed change unit 16 for establishing four forward and one reverse speeds. This speed change unit 16 is constructed to include a main transmission 18 for three forward and one reverse speeds and an under-drive auxiliary transmission 19. Moreover, the rotation of the main transmission 18 is transmitted through a counter drive gear 21 and a counter driven gear 22 to the auxiliary transmission 19, and the rotation of the output shaft 23 of the auxiliary transmission 19 is transmitted through an output gear 24 and a ring gear 25 to a differential mechanism 26.

In this differential mechanism 26, the rotation, as transmitted through the output gear 24 and the ring gear 25, is differentiated so that the differential rotations are transmitted through lefthand and right-hand drive shafts 27 and 28 to the not-shown drive wheels.

The main transmission 18 is equipped with a first planetary gear unit 31 and a second planetary gear unit 32 and further with the first clutch C1, a second clutch C2, a first brake B1, a second brake B2, a third brake B3 and one-way clutches F1 and F2 for transmitting the torque selectively between the individual elements of the first planetary gear unit 31 and the second planetary gear unit 32.

The first planetary gear unit 31 is composed of: a ring gear R₁ connected to a drive unit casing 34 through the third brake B3 and the one-way clutch F2 which are arranged in parallel with each other; a sun gear S₁ formed on a sun gear shaft 36 fitted on and rotatably supported by the output shaft 14; a carrier CR₁ connected to the counter drive gear 21; and pinions P_{1A} and P_{1B} meshing between the ring gear R₁ and the sun gear S₁ and rotatably supported by the carrier CR₁.

Moreover, the sun gear shaft 36 is connected through the second clutch C2 to the output shaft 14. The sun gear shaft 36 is further connected through the first brake B1 to the drive unit casing 34 and through the one-way clutch F1 and the second brake B2, as arranged in series, to the drive unit casing 34.

On the other hand, the second planetary gear unit 32 is composed of: a ring gear R₂ connected through the first clutch C1 to the output shaft 14; a sun gear S₂ formed on the sun gear shaft 36 integrally with the sun gear S₁; a carrier CR₂ connected to the carrier CR₁; and a pinion P₂ meshing between the ring gear R₂ and the sun gear S₂, rotatably supported by the carrier CR₂ and formed integrally with the pinion P_{1B}.

Moreover, the counter drive gear 21 is made to mesh with the counter driven gear 22 arranged in the auxiliary transmission 19, to transmit the rotation, as has its speed changed by the main transmission 18, to the auxiliary transmission 19.

This auxiliary transmission 19 is equipped with a third planetary gear unit 38 and with a third clutch C3, a fourth brake B4 and a one-way clutch F3 for transmitting the torque selectively between the individual elements of the third planetary gear unit 38.

The third planetary gear unit 38 is composed of: a ring gear R₃ connected to the counter driven gear 22; a sun gear S₃ formed on a sun gear shaft 39 rotatably fitted on the output shaft 23; a carrier CR₃ fixed on the output shaft 23; and a pinion P₃ meshing between the ring gear R₃ and the sun gear S₃ and rotatably supported by the carrier CR₃.

Here will be described the operations of the automatic transmission having the construction thus far described.

In Fig. 3: characters C1 designate the first clutch; characters C2 the second clutch; characters C3 the third clutch; characters B1 the first brake; characters B2 the second brake; characters B3 the third brake; characters B4 the fourth brake; and characters F1 to F3 the one-way clutches. Moreover: letter R designates a reverse running range; letter N an N-range; letter D a D-range; characters 1ST a 1st-speed gear stage; characters 2ND a 2nd-speed gear stage; characters 3RD a 3rd-speed gear stage; and characters 4TH a 4th-speed gear stage.

Moreover, symbol ○ indicates that the first clutch C1, the second clutch C2, the third clutch C3, the first brake B1, the second brake B2, the third brake B3 and the fourth brake B4 are applied, and that the one-way clutches F1 to F3 are locked. On the other hand, symbol X indicates that the first clutch C1, the second clutch C2, the third clutch C3, the first brake B1, the second brake B2, the third brake B3 and the fourth brake B4 are released, and that the one-way clutches F1 to F3 are free.

Incidentally, symbol (○ ) indicates that the third brake B3 is applied at the engine brake time.

At the 1st speed in the D-range, the first clutch C1 and the fourth brake B4 are applied to lock the one-way clutches F2 and F3. Then, the rotation of the output shaft 14 is transmitted through the first clutch C1 to the ring gear R₂. In this state, the rotation of the ring gear R₁ is blocked by the one-way clutch F2 so that the rotation of the carrier CR₂ is drastically decelerated and transmitted to the counter driven gear 21 while rotating the sun gear S₂ idly.

The rotation, as transmitted from the counter drive gear 21 to the counter driven gear 22, is transmitted to the ring gear R₃. However, the rotation of the sun gear S₃ is blocked by the fourth brake B4 so that the rotation of the carrier CR₃ is further decelerated and transmitted to the output shaft 23.

At the 2nd speed in the D-range, on the other hand, the first clutch C1, the first brake B1, the second brake B2 and the fourth brake B4 are applied to lock the one-way clutches F1 and F3. Then, the rotation of the output shaft 14 is transmitted through the first clutch C1 to the ring gear R₂. The rotation of this ring gear R₂ is decelerated and transmitted to the carrier CR₂, because the rotation of the sun gear S₂ is blocked by the second brake B2 and the one-way clutch F1. The rotation of the carrier CR₂ is transmitted to the counter drive gear 21 while rotating the ring gear R₁ idly.

The rotation, as transmitted from the counter drive gear 21 to the counter driven gear 22, is transmitted to the ring gear R₃. However, the rotation of the sun gear S₃ is blocked by the fourth brake B4 so that the rotation of the carrier CR₃ is decelerated and transmitted to the output shaft 23.

Next, at the 3rd speed in the D-range, the first clutch C1, the third clutch C3, the first brake B1 and the second brake B2 are applied to lock the one-way clutch F1. Then, the rotation of the output shaft 14 is transmitted through the first clutch C1 to the ring gear R₂. The rotation of this ring gear R₂ is decelerated and transmitted to the carrier CR₂ because the rotation of the sun gear S₂ is blocked by the second brake B2 and the one-way clutch F1. The rotation of the carrier CR₂ is transmitted to the counter drive gear 21 while rotating the ring gear R₁ idly.

The rotation, as transmitted from the counter drive gear 21 to the counter driven gear 22, is transmitted to the ring gear R₃. However, the relative rotation between the carrier CR₃ and the sun gear S₃ is blocked by the third clutch C3 so that the third planetary gear unit 38 comes into a direct-coupled state. As a result, the rotation of the counter driven gear 22 is unchangedly transmitted to the output shaft 23.

Next, at the 4th speed in the D-range, the first clutch C1, the second clutch C2, the third clutch C3 and the second brake B2 are applied. Then, the rotation of the output shaft 14 is transmitted through the first clutch C1 to the ring gear R₂ and through the second clutch C2 to the sun gear S₂ to bring the first planetary gear unit 31 and the second planetary gear unit 32 into direct-coupled states. As a result, the rotation of the output shaft 11 is unchangedly transmitted to the counter drive gear 21.

The rotation, as transmitted from the counter drive gear 21 to the counter driven gear 22, is transmitted to the ring gear R₃. However, the relative rotation between the carrier CR₃ and the sun gear S₃ is blocked by the third clutch C3 so that the third planetary gear unit 38 comes into the direct-coupled state. As a result, the rotation of the counter driven gear 22 is unchangedly transmitted to the output shaft 23.

Incidentally, the automatic transmission is provided with a hydraulic control unit 40 for establishing the individual gear stages by applying/releasing the first clutch C1, the second clutch C2, the third clutch C3, the first brake B1, the second brake B2, the third brake B3 and the fourth brake B4.

Moreover, the hydraulic control unit 40 is connected with the automatic transmission control unit (ECU) 41 so that they are operated according to the control program of the automatic transmission control unit 41.

With this automatic transmission control unit 41, on the other hand, there are individually connected a neutral start switch (N.S.S.W.) 45, an RPM sensor 47, a brake switch 48, the engine RPM sensor 49, a throttle opening sensor 50 and a vehicle speed sensor 51.

Moreover, the shift position of the not-shown shift lever, i.e., the selected range can be detected by the neutral start switch 45. The RPM of the output shaft 14 of the torque converter 12 (as will be called the "clutch input side RPM") N_{C1}, as located at the input side of the first clutch C1, can be detected by the RPM sensor 47.

Furthermore, whether or not the not-shown brake pedal is depressed can be detected by the brake switch 48. An engine RPM N_{E} can be detected by the engine RPM sensor 49. The throttle opening θ can be detected by the throttle opening sensor 50. The RPM (as will be called the "output RPM") Nₒ at the output side of the speed change unit 16, i.e., the vehicle speed can be detected by the vehicle speed sensor 51.

Here will be described the hydraulic control unit 40.

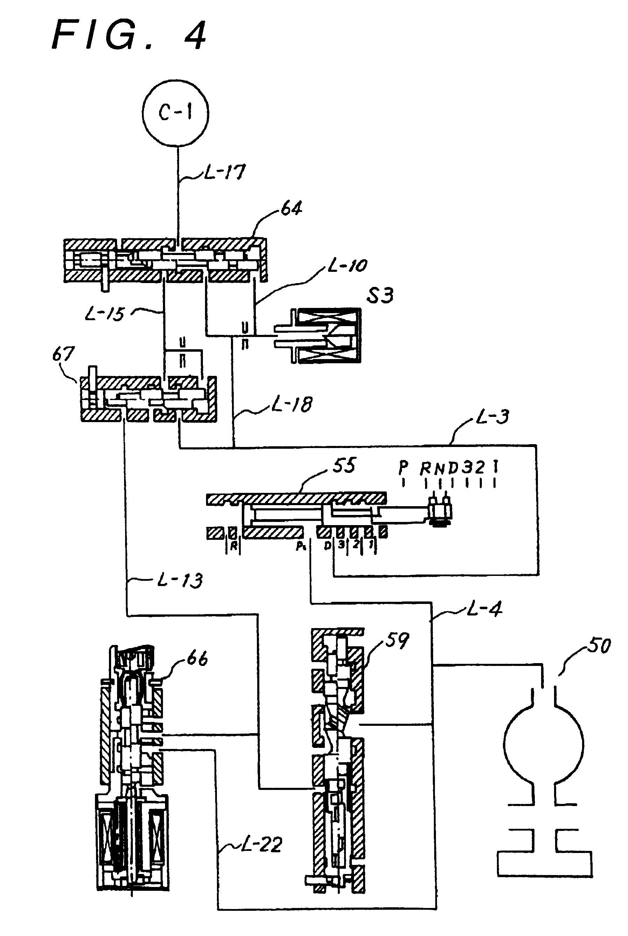

Fig. 4 is a hydraulic circuit diagram showing an essential portion of the hydraulic control unit in the first embodiment of the present invention.

In the drawing, a primary valve 59 regulates the oil pressure coming from the a pump 50 and outputs it as a line pressure to an oil line L-4. Moreover, a manual valve 55 is provided with ports 1, 2, 3, D, P_{L} and R so that the line pressure, as outputted from the primary valve 59, is fed via the oil line L-4 to the port P_{L}. The manual valve 55 is connected to the not-shown shift lever, which is operated to output the line pressure as the 1st-range pressure, the 2nd-range pressure, 3rd-range pressure, the D-range pressure and the R-range pressure, respectively, from the ports 1, 2, 3, D and R.

When the shift lever is placed in the D-range position, the oil under the D-range pressure, as generated in the port D, is fed to the individual hydraulic servos to apply the first clutch C1 (Fig. 2), the second clutch C2, the third clutch C3, the first brake B1, the second brake B2 and the third brake B3 selectively thereby establish one of the gear stages.

In this case, when a gear stage is set to correspond to the throttle opening θ so that its shift output is generated, the solenoid signals corresponding to the shift output are turned ON/OFF. When the solenoid valves are opened/closed in response to the ON/OFF of the solenoid valves, the not-shown 1-2 shift valve, 2-3 shift valve and 3-4 shift valve are switched.

Incidentally, a linear solenoid valve 66 is arranged for the neutral control. This linear solenoid valve 66 is controlled in response to the signal from the hydraulic control unit 40 so that it adjusts the oil pressure, as fed from the primary valve 59 via an oil line L-22, to generate a throttle pressure P_{TH}. Moreover, the linear solenoid valve 66 feed the throttle pressure P_{TH} as a control oil pressure to a C-1 control valve 67 via an oil line L-13.

The C-1 control valve 67 is fed with the D-range pressure via an oil line L-3 so that it regulates the fed D-range pressure to the oil pressure (as will be called the "C-1 oil pressure") P_{C1} corresponding to the throttle pressure P_{TH} from the linear solenoid valve 66 and feeds it to an oil line L-15.

With the oil line L-15, on the other hand, there is connected a neutral relay valve 64 which is connected to a hydraulic servo C-1 via an oil line L-17 and to a solenoid valve S3 via an oil line L-10. Moreover, the neutral relay valve 64 is connected with the oil line L-3 via an oil line L-18 so that it can feed the D-range pressure.

At the neutral control time, the solenoid valve S3 is turned ON so that the neutral relay valve 64 takes its upper half position. As a result, the C-1 oil pressure P_{C1}, as generated in the oil line L-15, is fed via the oil line L-17 to the hydraulic servo C-1.

At the 1st to 4th speed times, on the other hand, the solenoid valve S3 is turned OFF so that the neutral relay valve 64 takes its lower half position. As a result, the oil under the D-range pressure is fed via the oil lines L-3 and L-18 and the neutral relay valve 64 and the oil line L-17 to the hydraulic servo C-1.

Here, the neutral relay valve 64, the linear solenoid valve 66, the C-1 control valve 67 and the hydraulic servo C-1 thus far described constitute the application force generating means 102.

Here will be described the operations of the automatic transmission control unit 41.

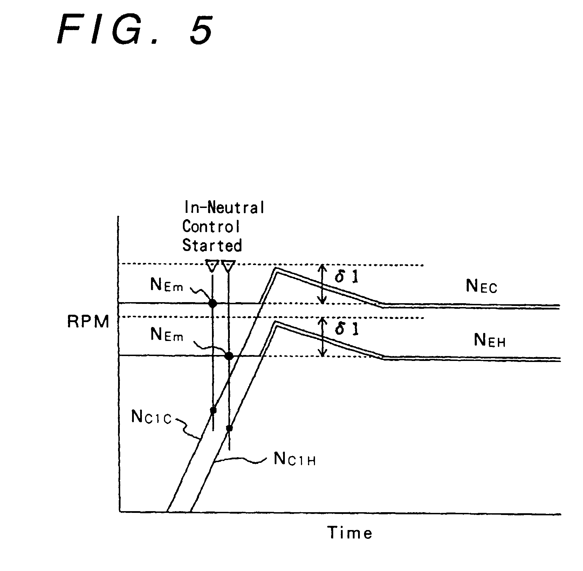

Fig. 5 is a time chart of an automatic transmission control system in the first embodiment of the present invention. Incidentally, in the drawing, the abscissa indicates the time, and the ordinate indicates the RPM.

In the present embodiment, the neutral control is composed of a first clutch release control for a sweep -down operation by lowering the throttle pressure P_{TH} gradually, an in-neutral control for holding the released state of the first clutch C1 by repeating the pressure reduction/rise, and a first clutch application control for a sweep-up operation by raising the throttle pressure P_{TH} gradually.

When the driver depresses the not-shown accelerator pedal so as to start the vehicle, the engine RPM N_{E} rises. In the present embodiment, therefore, the first clutch application control is started, but the neutral control is ended, when the engine RPM N_{E} exceeds a set value.

Incidentally, the engine RPM N_{E} in the neutral control fluctuates under the various conditions so that the idling RPM at the air conditioning operation (for an idle-up) rises at a warming-up run, for example. In other words, the fast idling RPM N_{EC} at the cooling time immediately after the engine (Fig. 2) is started is higher than an idling RPM N_{EH} after the warming-up run.

Thus, either the engine RPM N_{E} at a predetermined time in the first clutch release control or the engine RPM N_{E} at the instant when the in-neutral control is started is set as an initial engine RPM N_{Em} so that the first clutch application control is started on the basis of the initial engine RPM N_{Em}.

Specifically, the first clutch application control is started if the following relations hold for an end engine RPM N_{En} which is calculated by adding a set value δ 1 to the initial engine RPM N_{Em}:${\text{N}}_{\text{E}} {\text{≧ N}}_{\text{En}} {\text{= N}}_{\text{Em}} \text{+ δ 1.}$ Here, the set value δ 1 is set to correspond to the temporary rise of the engine RPM N_{E}, as caused when the first clutch C1 is released.

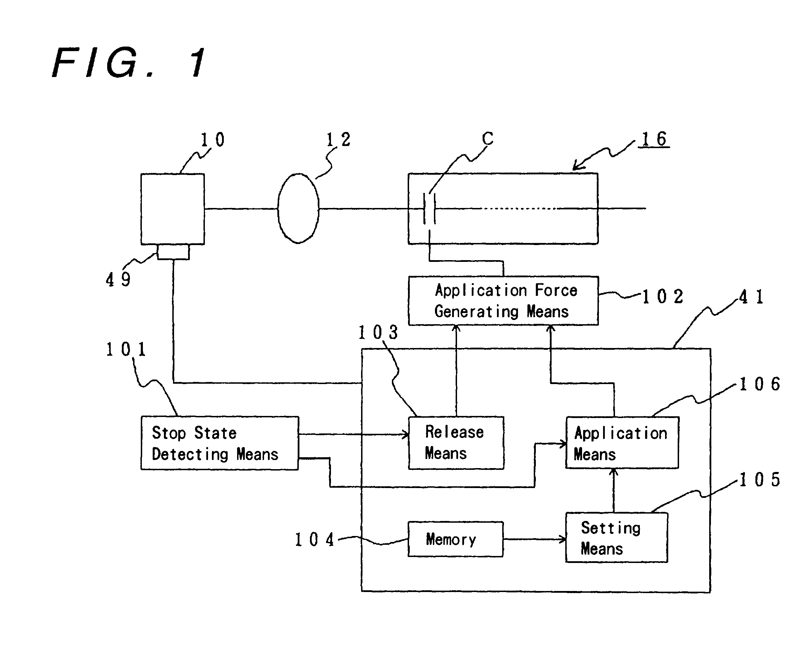

Moreover, each time the initial engine RPM N_{Em} is subjected to the neutral control, it is stored in the memory 104 (Fig. 1) which is arranged in the automatic transmission control unit 41.

In the warming-up run, for example, a first idling RPM N_{EC} rises so that the initial engine RPM N_{Em} accordingly rises. As a result, the set value δ 1 takes such a small value as considers only the temporary rise of the engine RPM N_{E} so that the end engine RPM N_{En} can be set to a value approximate the initial engine RPM N_{Em}.

When an accessory such as the air conditioner is operated to idle up the engine 10, the initial engine RPM N_{Em} accordingly rises, too. Hence, the set value δ 1 takes a likewise small value so that the end engine RPM N_{En} can be set to a value approximate the initial engine RPM N_{Em}.

As a result, the delay in the engagement of the first clutch C1 can be reduced. Since the first clutch C1 can be applied before the engine RPM N_{E} rises, it is possible not only to prevent the application shock but also to reduce the thermal load upon the friction members.

Moreover, an excessive dragging of the first clutch C1 can be prevented from improve the durability of the automatic transmission.

Here, reference characters N_{C1C} designate a clutch input side RPM at the cooling time immediately after the engine 10 is started, and characters N_{C1H} designate a clutch input side RPM after the warming-up run is ended.

Incidentally, when the engine RPM N_{E} in the first clutch release control is to be set as the initial engine RPM N_{Em}, the speed ratio e of the torque converter 12 is compared with the set value δ 1, and the engine RPM N_{E} at the instant when the speed ratio e exceeds the set value is set as the initial engine RPM N_{Em}.

However, when the engine RPM N_{E} at the instant or immediately after the first clutch release control is started is set as the initial engine RPM N_{Em}, the accelerator pedal is released from its depressed state. If the engine RPM N_{E} does not completely drop to the idling RPM N_{EH}, a relatively high engine RPM N_{E} in the course of dropping is set as the initial engine RPM N_{Em}. As a result, the end engine RPM N_{Em} accordingly rises to delay the engagement of the first clutch C1.

Therefore, the engine RPM N_{E} at the latest instant after the neutral control has been started is set as the initial engine RPM N_{Em}.

Specifically, the engine RPM N_{E} in the in-neutral control is substantially equal to the ordinary engine RPM N_{E} at the instant of starting the first clutch release control, so that the engine RPM N_{E} at the instant of starting the in-neutral control is set as the initial engine RPM N_{Em}.

In this case, the engine RPM N_{E} while the first clutch C1 is shifting from the applied state to the released state is set as the initial engine RPM N_{Em} so that the intrinsic idling RPM can be accurately detected to prevent the delay in the engagement of the first clutch C1. Moreover, the first clutch C1 can be applied before the engine RPM N_{E} rises, not only to prevent the application shock but also to lighten the thermal load upon the friction members.

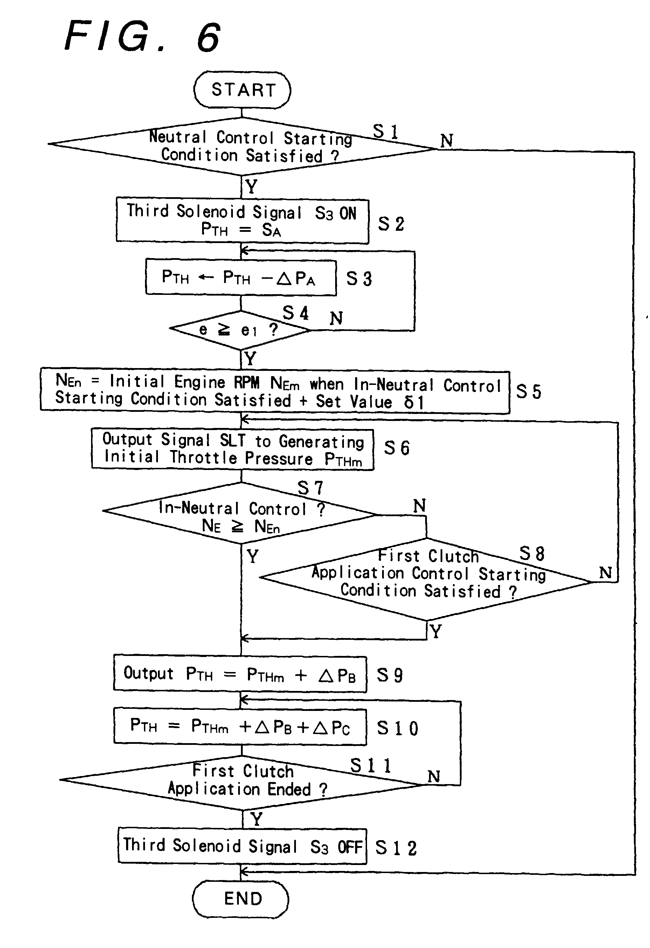

Fig. 6 is a flow chart illustrating the operations of the automatic transmission control system in the first embodiment of the present invention. In this case: the first clutch release control is executed at Steps S1 to S4; the in-neutral control is executed at Steps S5 to S8; and the first clutch application control is executed at Steps S9 to S12.

Step S1: The stop state detecting means 101 (Fig. 1) decides whether or not the condition for starting the neutral control is satisfied. The routine advances to Step S2, if the starting condition is satisfied, but is ended if dissatisfied.

In this case, it is decided that the starting condition is satisfied, if all of the following conditions are satisfied: that the engine 10 (Fig. 2) is in the idling state so that the throttle opening θ is in the fully closed state; that the not-shown brake pedal is depressed so that the brake switch 48 is ON; that the D-range is selected by the not-shown shift lever; and that the vehicle speed is less than the set value and substantially zero so that the vehicle is substantially stopped.

Step S2: A third solenoid signal S₃ for turning ON/OFF the solenoid valve S3 (Fig. 4) is turned ON, and the throttle pressure P_{TH} is set to a value S_{A} with reference to the not-shown map.

Step S3: The release means 103 lowers the throttle pressure P_{TH}. In this case, the residue, which is calculated by subtracting a sweep-down pressure Δ P_{A} from the throttle pressure P_{TH}, is set as the throttle pressure P_{TH}.

Step S4: The speed ratio e is calculated by the following formula from the engine RPM N_{E} and the clutch input side RPM N_{C1}:${\text{e = N}}_{\text{C1}} {\text{/N}}_{\text{E}} \text{.}$

Moreover, it is decided whether or not the speed ratio e is over a constant e₁. The routine advances to Step S5, if the speed ratio e is over the constant e₁, but returns to Step S3 if the speed ratio e is below the constant e₁. In the present embodiment, the constant e₁ is 0.5.

Step S5: The setting means 105 sets the engine RPM N_{E} at the instant when the condition for starting the in-neutral control of the first clutch C1 is satisfied, as the initial engine RPM N_{Em}, and sets the value which is calculated by adding the set value δ 1 to the initial engine RPM N_{Em}. as the end engine RPM N_{En}.

Step S6: The automatic transmission control unit 41 outputs a signal SLT to the linear solenoid valve 66 to generate an initial throttle pressure P_{THm}.

Step S7: The application means 106 decides whether or not the clutch is in the in-neutral control and whether or not the engine RPM N_{E} is over the end engine RPM N_{En}. The routine advances to Step S9, if the clutch is in the in-neutral control and if the engine RPM N_{E} is over the end engine RPM N_{En}, but to Step S8 if not in the in-neutral control or if the engine RPM N_{E} is below the end engine RPM N_{En}.

Step S8: The application means 106 decides whether or not the condition for starting the first clutch application control is satisfied. The routine advances to Step S9, if the starting condition is satisfied, but returns to Step S6 if dissatisfied. In this case, the condition for starting the first clutch application control is satisfied if the stop state of the vehicle is not detected by the stop state detecting means 101 while the first clutch C1 is being released.

Step S9: The application means 106 outputs the value, which is calculated by adding a pressure Δ P_{B} to the initial throttle pressure P_{THm}, as the throttle pressure P_{TH}. If the C-1 oil pressure P_{C1} is abruptly raised when the first clutch C1 shifts from the released state to the completely applied state, the engine RPM N_{E} decreases with the engagement of the first clutch C1, or a serious application shock occurs. If the C-1 oil pressure P_{C1} is gradually raised, on the other hand, the time period for the first clutch C1 to end its engagement is elongated to cause the engine racing.

Therefore, an oil pressure lower than the oil pressure at the end of application of the first clutch C1 is fed for a predetermined time period to the hydraulic servo C-1 to establish a partially engaging state.

Step S10: The application means 106 raises the throttle pressure P_{TH}. Specifically, the value, which is calculated by adding the pressure Δ P_{B} and a sweep-up pressure Δ P_{C} to the initial throttle pressure P_{THm}, is outputted as the throttle pressure P_{TH}.

Step S11: It is decided whether or not the engagement of the first clutch C1 has been ended. The routine advances to Step S12, if the engagement of the first clutch C1 is ended, but returns to Step S10 if the engagement is not ended.

Step S12: The third solenoid signal S₃ is turned OFF.

Incidentally, the neutral control has a main object to improve the fuel economy. In this neutral control, however, the first clutch C1 is brought into the released state so that the load upon the engine 10 is accordingly lightened. In the neutral control therefore, the engine control is executed to reduce the fuel injection rate at the side of the engine 10.

Even if the engine RPM N_{E} is detected, and the RPM control is executed to achieve the set idling RPM even if the aforementioned fuel injection rate is reduced.

Incidentally, the RPM control is executed, after the fuel injection rate is actually lowered so that the engine RPM N_{E} changes. When the load upon the engine 10 fluctuates, the idling RPM may temporarily fluctuate. This fluctuation occurs even in the neutral control. With the first clutch C1 being substantially released, the load upon the engine 10 is lightened, so that the engine RPM N_{E} temporarily races before a predetermined idling RPM is achieved.

When the aforementioned end engine RPM N_{En} is to be set, the temporary rise in the engine RPM N_{E} may be erroneously detected, unless considered, as the depression of the accelerator pedal. However, the temporary rise in the engine RPM N_{E} is not fixed but fluctuates more or less. Hence, the end engine RPM N_{En} has to be set by considering that fluctuation, and the set value δ 1 has to be accordingly increased.

Thus, here will be described a second embodiment which is enabled to reduce the set value δ the more.

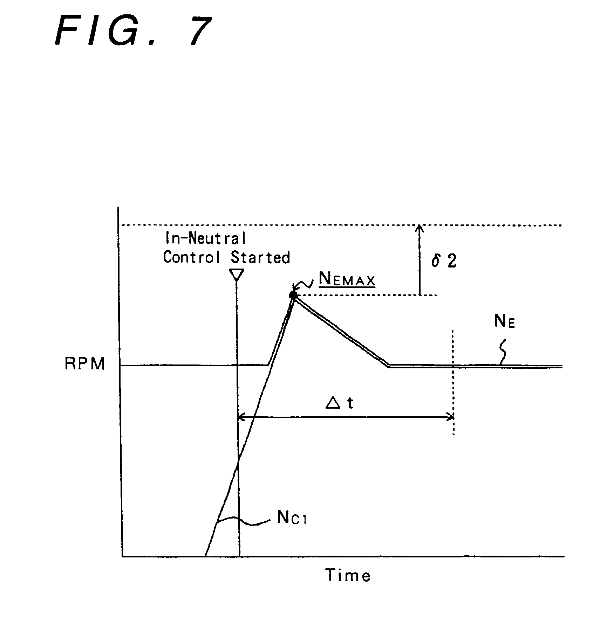

Fig. 7 is a time chart of an automatic transmission control system in a second embodiment of the present invention. Incidentally, the abscissa in the drawing indicates the time, and the ordinate indicates the RPM.

In this case, the first clutch application control is started if the following relations hold for the maximum engine RPM N_{EMAX} or the maximum of the engine RPM N_{E} for a set time period Δt elapsed from the instant of starting the in-neutral control and for the end engine RPM N_{En} or the sum of the maximum engine RPM N_{EMAX} and a set value δ 2:${\text{N}}_{\text{E}} {\text{≧ N}}_{\text{En}} {\text{= N}}_{\text{EMAX}} \text{+ δ 2.}$ Here, the set value δ 2 is set to such a small value as considers the detector error or the like of the engine RPM sensor 49.

Moreover, the maximum engine RPM N_{EMAX} is stored at each neutral control in the memory 104 (Fig. 1) in the automatic transmission control system 41 (Fig. 2).

In the warming-up run, for example, the fast idling RPM N_{EC} rises, but the maximum engine RPM N_{EMAX} accordingly rises. As a result, the set value δ 2 can be set to such a small value as considers only the detection error or the like of the engine RPM sensor 49.

When the engine 10 is idled up by operating an accessory such as the air conditioner, the maximum engine RPM N_{EMAX} accordingly rises, too, so that the set value δ 2 can also be reduced.

As a result, the first clutch C1 can be applied before the engine RPM N_{E} rises. This makes it possible not only to prevent the application shock but also to lighten the thermal load upon the friction members. It is further possible to prevent the excessive dragging of the first clutch C1 thereby to improve the durability of the automatic transmission. Incidentally, reference characters N_{C1} designate the clutch input side RPM.

In this case, the engine RPM N_{E}, as has temporarily risen when the establishment of the released state of the first clutch C1 is started, is detected directly as the maximum engine RPM N_{EMAX}. Thus, the fluctuation of the temporary rise in the engine RPM N_{E} need not be considered so that the set value δ 2 can be further reduced. This makes it possible to reduce the delay in the engagement of the first clutch C1 the more. Moreover, since the first clutch C1 can be applied before the rise in the engine RPM N_{E}, it is possible not only to prevent the application shock but also to lighten the thermal load upon the friction members.

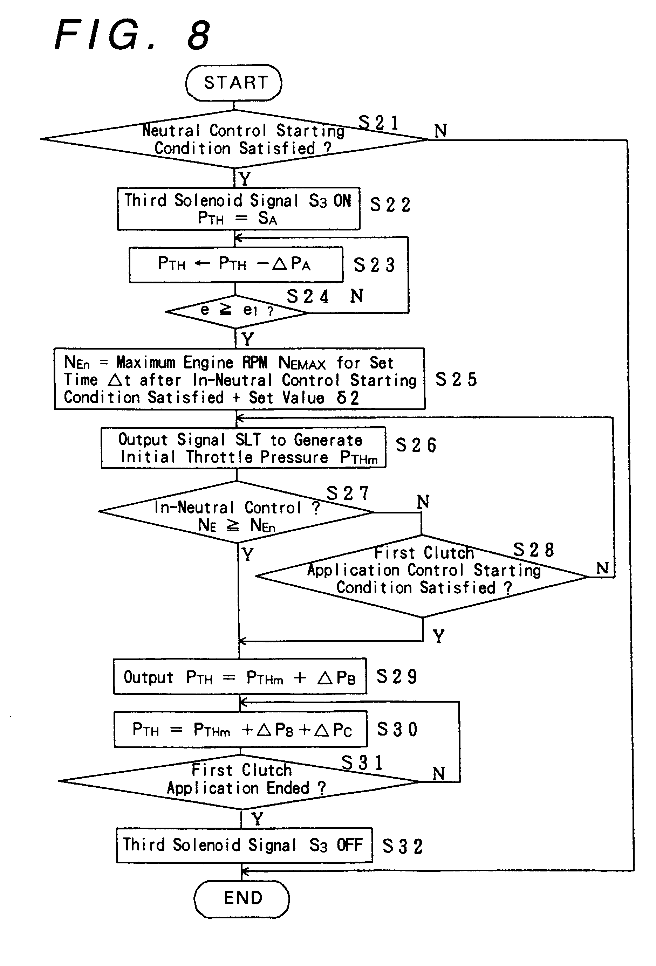

Fig. 8 is a flow chart illustrating the operations of the automatic transmission control system in the second embodiment of the present invention. In this case: the first clutch release control is executed at Steps S21 to S24; the in-neutral control is executed at Steps S25 to S28; and the first clutch application control is executed at Steps S29 to S32.

Step S21: It is decided whether or not the neutral control starting condition is satisfied. The routine advances to Step S22, if the starting condition is satisfied, but is ended if dissatisfied.

Step S22: The third solenoid signal S₃ for turning ON/OFF the solenoid valve S3 (Fig. 4) is turned ON, and the throttle pressure P_{TH} is set to the value S_{A} with reference to the not-shown map.

Step S23: The throttle pressure P_{TH} is lowered. In this case, the value, which is calculated by subtracting the sweep-down pressure ΔP_{A} from the throttle pressure P_{TH}, is set as the throttle pressure P_{TH}.

Step S24: It is decided whether or not the speed ratio e is over the constant e₁. The routine advances to Step S25, if the speed ratio e is over the constant e₁, but returns to Step S23 if the speed ratio e is below the constant e₁. In the present embodiment, the constant e₁ is 0.5.

Step S25: After the in-neutral control starting condition of the first clutch C1 has been satisfied, the maximum of the engine RPM N_{E} till the lapse of the set time Δ t is set as the maximum engine RPM N_{EMAX}, and the value, which is calculated by adding the set value δ 2 to the maximum engine RPM N_{EMAX}, is set as the end engine RPM N_{En}.

Step S26: The signal SLT is outputted to the linear solenoid valve 66 (Fig. 4) to generate the initial throttle pressure P_{THm}.

Step S27: It is decided whether or not the control is in the in-neutral control and whether or not the engine RPM N_{E} is over the end engine RPM N_{En}. The routine advances to Step S 29, if in the in-neutral control and if the engine RPM N_{E} is over the end engine RPM N_{En}, but to Step S28 if not in the in-neutral control and if the engine RPM N_{E} is below the end engine RPM N_{En}.

Step S28: It is decided whether or not the first clutch application control starting condition is satisfied. The routine advances to Step S29, if the starting condition is satisfied, but returns to Step S 26 if dissatisfied.

Step S29: The value, which is calculated by adding the pressure Δ P_{B} to the initial throttle pressure P_{THm}, is outputted as the throttle pressure P_{TH}.

Step S30: The value, which is calculated by adding the pressure Δ P_{B} and the sweep-up pressure Δ P_{C} to the initial throttle pressure P_{THm}, is outputted as the throttle pressure P_{TH}.

Step S31: It is decided whether or not the application of the first clutch C1 has been ended. The routine advances to Step S32, if the application of the first clutch C1 has been ended, but returns to Step S30 if not ended.

Step S32: The third solenoid signal S₃ is turned OFF.

According to the present invention, as described above, the control system for an automatic transmission, comprising: a fluid transmission unit for transmitting the rotation of an engine to a speed change unit; a clutch adapted to be applied when a forward running range is selected, to transmit the rotation of the fluid transmission unit to the transmission mechanism of the speed change unit; stop state detecting means for detecting stop state of a vehicle, in which a forward running range is selected, in which the throttle opening is fully closed, in which the brake pedal is depressed and in which the vehicle speed is substantially zero; engine RPM detecting means for detecting the engine RPM; application force generating means for generating the application force of the clutch; and a control unit.

Moreover, the control unit includes: release means for weakening the application force of the clutch, when the stop state of the vehicle is detected by the stop state detecting means, to release the clutch; storage means for storing the engine RPM detected by the engine RPM detecting means, as an initial engine RPM when the clutch is released by the released means; setting means for setting an end engine RPM on the basis of the initial engine RPM stored in the storage means; and application means for strengthening, while the clutch is released, the application force of the clutch to apply the clutch, if the stop state of the vehicle is not detected by the stop state detecting means, and for strengthening the application force of the clutch irrespective of the signal from the stop state detecting means, to apply the clutch if the engine RPM detected by the engine RPM detecting means exceeds the end engine RPM.

If, in this case, it is decided by the stop state detecting means that the forward running range is selected, that the throttle opening is fully closed, that the brake pedal is depressed and that the vehicle speed is substantially zero, the neutral control is started.

Moreover, the release means weakens the application force of the clutch to release the clutch.

On the other hand, the aforementioned application means strengthens the application force of the clutch to apply the clutch, if the stop state of the vehicle is not detected by the stop state detecting means while the clutch is released.

Moreover, the application means strengthens the application force of the clutch to apply the clutch independently of the signal from the stop state detecting means, if the engine RPM detected by the engine RPM detecting means exceeds the aforementioned end engine RPM.

In this case of the warming-up operation, for example, the fast idling RPM rises so that the initial engine RPM accordingly rises. When an accessory such as the air conditioner is operated to idle up the engine, the initial engine RPM accordingly increases.

As a result, the end engine RPM can be set to a value approximate the initial engine RPM so that the delay in the clutch application can be reduced. Moreover, the clutch can be applied before the engine RPM rises, not only to prevent the application shock but also to lighten the thermal load upon the friction members.

In another control system for an automatic transmission of the present invention, moreover, the release means weakens the application force of the clutch gradually, if the stop state of the vehicle is detected by the stop state detecting means, to shift the clutch gradually from an applied state to a released state, and wherein the setting means sets the engine RPM, while the clutch is being shifted from the applied state to the released state, as the initial engine RPM.

In this case, the engine RPM at the time as late as possible after the start of the neutral control is set as the initial engine RPM. As a result, a relatively high engine RPM being lowered is not set as the initial engine RPM, so long as the accelerator pedal is released from its depressed state but the engine RPM is not completely lowered to the idling RPM. As a result, the intrinsic idling RPM can be accurately detected to prevent the delay in the engagement of the clutch. Before the engine RPM rises, moreover, the clutch can be applied not only to prevent the application shock but also to lighten the thermal load upon the friction members.

In still another control system for an automatic transmission of the present invention, moreover, the setting means sets the maximum engine RPM till the lapse of a set time after the establishment of the released state of the clutch has been started by the release means, as the initial engine RPM.

In this case, the engine RPM, as temporarily raised when the released state of the clutch is established, is directly detected as the maximum engine RPM so that the fluctuation of the temporary rise in the engine RPM need not be taken into consideration.

As a result, the end engine RPM can be set to a value the more approximate the initial engine RPM so that the delay in the clutch application can be reduced the more. Moreover, the clutch can be applied before the engine RPM rises, not only to prevent the application shock but also to lighten the thermal load upon the friction members.

Incidentally, the present invention should not be limited to the foregoing embodiments but can be modified in various manners on the basis of its gist, and these modifications should not be excluded from the scope thereof.

## Claims

1. A control system for an automatic transmission, comprising: a fluid transmission unit (12) for transmitting the rotation of an engine (10) to a speed change unit (16); a clutch (C) adapted to be applied when a forward running range is selected, to transmit the rotation of said fluid transmission unit (12) to the transmission mechanism of said speed change unit (16); stop state detecting means (101) for detecting stop state of a vehicle, in which a forward running range is selected, in which the throttle opening is fully closed, in which the brake pedal is depressed and in which the vehicle speed is substantially zero; engine RPM detecting means (49) for detecting the engine RPM; application force generating means (102) for generating the application force of said clutch (C); and a control unit (41),
wherein said control unit (41) includes: release means (103) for weakening the application force of said clutch (C), when the stop state of the vehicle is detected by said stop state detecting means (101), to release said clutch (C); storage means (104) for storing the engine RPM detected by said engine RPM detecting means (49), as an initial engine RPM when said clutch (C) is released by said release means (103); setting means (105) for setting an end engine RPM on the basis of the initial engine RPM stored in said storage means (104); and application means (106) for strengthening, while said clutch (C) is released, the application force of said clutch (C) to apply said clutch (C), if the stop state of the vehicle is not detected by said stop state detecting means (101), and for strengthening the application force of said clutch (C) irrespective of the signal from said stop state detecting means (101), to apply said clutch (C) if the engine RPM detected by said engine RPM detecting means (49) exceeds said end engine RPM.

2. A control system for an automatic transmission according to claim 1,
wherein said release means (103) weakens the application force of said clutch (C) gradually, if the stop state of the vehicle is detected by said stop state detecting means (101), to shift said clutch (C) gradually from an applied state to a released state, and wherein said setting means (105) sets the engine RPM, while said clutch (C) is being shifted from the applied state to the released state, as said initial engine RPM.

3. A control system for an automatic transmission according to claim 1 or 2,
wherein said setting means (105) sets the maximum engine RPM till the lapse of a set time after the establishment of the released state of said clutch (C) has been started by said release means (103), as said initial engine RPM.

## Patentansprüche

1. Steuerungssystem für Automatikgetriebe, mit:
einer Strömungsgetriebeeinheit (12) zum Übertragen der Drehbewegung eines Motors (10) zu einer Gangschalteinheit (16);
einer Kupplung (C), die dazu geeignet ist, eingerückt zu werden, wenn ein Vorwärtsfahrbereich ausgewählt ist, um die Drehbewegung der Strömungsgetriebeeinheit (12) zum Getriebemechanismus der Gangschalteinheit (16) zu übertragen;
einer Haltezustanderfassungseinrichtung (101) zum Erfassen eines Haltezustands eines Fahrzeugs, in dem ein Vorwärtsfahrbereich ausgewählt ist, eine Drosselklappe vollständig geschlossen ist, ein Bremspedal betätigt ist und die Fahrzeuggeschwindigkeit im wesentlichen null beträgt;
einer Motordrehzahlerfassungseinrichtung (49) zum Erfassen der Motordrehzahl;
einer Einrückkrafterzeugungseinrichtung (102) zum Erzeugen der Einrückkraft der Kupplung (C); und
einer Steuereinheit (41);
wobei die Steuereinheit (41) aufweist:
eine Ausrückeinrichtung (103) zum Reduzieren der Einrückkraft der Kupplung (C), wenn durch die Haltezustanderfasungseinrichtung (101) der Haltezustand des Fahrzeugs erfaßt wird, um die Kupplung (C) auszurücken;
eine Speichereinrichtung (104) zum Speichern der durch die Motordrehzahlerfassungseinrichtung (49) erfaßten Motordrehzahl, als Anfangs-Motordrehzahl, wenn die Kupplung (C) durch die Ausrückeinrichtung (103) ausgerückt wird;
eine Setzeinrichtung (105) zum Setzen einer End-Motordrehzahl auf der Basis der in der Speichereinrichtung (104) gespeicherten Anfangs-Motordrehzahl; und
eine Einrückeinrichtung (106) zum Verstärken der Einrückkraft der Kupplung (C), während die Kupplung (C) ausgerückt ist, um die Kupplung (C) einzurücken, wenn der Haltezustand des Fahrzeugs durch die Haltezustanderfassungseinrichtung (101) nicht erfaßt wird, und zum Verstärken der Einrückkraft der Kupplung (C) unabhängig vom Signal von der Haltezustanderfassungseinrichtung (101), um die Kupplung (C) einzurücken, wenn die durch die Drehzahlerfassungseinrichtung (49) erfaßte Motordrehzahl größer ist als die End-Motordrehzahl.

2. Steuerungssystem nach Anspruch 1,
wobei die Ausrückeinrichtung (103) die Einrückkraft der Kupplung (C) allmählich reduziert, wenn durch die Haltezustanderfassungseinrichtung (101) der Haltezustand des Fahrzeugs erfaßt wird, um die Kupplung (C) allmählich von einem eingerückten Zustand auf einen ausgerückten Zustand zu schalten, und wobei die Setzeinrichtung (105) die Motordrehzahl, während die Kupplung (C) vom eingerückten Zustand auf den ausgerückten Zustand geschaltet wird, als Anfangs-Motordrehzahl setzt.

3. Steuerungssystem nach Anspruch 1 oder 2,
wobei die Setzeinrichtung (105), nachdem der Ausrückvorgang der Kupplung (C) durch die Ausrückeinrichtung (103) gestartet wurde, die maximale Motordrehzahl als Anfangs-Motordrehzahl setzt, bis eine vorgegebene Zeitdauer abgelaufen ist.

## Revendications

1. Un dispositif de commande pour une transmission automatique, comprenant : une unité de transmission fluidique (12) destinée à transmettre le mouvement de rotation d'un moteur (10) à une unité de changement de vitesse (16); un embrayage (C) adapté pour être mis en service lorsqu'une plage de roulage en marche avant est sélectionnée, afin de transmettre le mouvement de rotation de ladite unité de transmission fluidique (12) au mécanisme de transmission de ladite unité de changement de vitesse (16); des moyens de détection d'état d'arrêt (101) pour détecter l'état d'arrêt d'un véhicule, état dans lequel la plage de roulage en marche avant est sélectionnée, dans lequel l'ouverture d'étranglement est complètement fermée, dans lequel la pédale de frein est enfoncée et dans lequel la vitesse du véhicule est pratiquement nulle; des moyens de détection de vitesse de rotation du moteur (49) destinés à détecter la vitesse de rotation du moteur; des moyens de génération de force d'application (102) pour générer la force d'application dudit embrayage (C); et une unité de commande (41),
dans lequel ladite unité de commande (41) comprend : des moyens de débrayage (103) destinés à diminuer la force d'application dudit embrayage (C), lorsque l'état d'arrêt du véhicule est détecté par ledit moyen de détection d'état d'arrêt (101), afin de débrayager ledit embrayage (C); des moyens de stockage (104) destinés à stocker la vitesse de rotation du moteur détectée par lesdits moyens de détection de vitesse de rotation du moteur (49) à titre de vitesse de rotation du moteur initiale lorsque ledit embrayage (C) est débrayé par lesdits moyens de débrayage (103); des moyens de fixation (105) destinés à fixer une vitesse de rotation du moteur finale sur la base de la vitesse de rotation du moteur initiale, mémorisée dans lesdits moyens de stockage (104); et des moyens d'application (106), pour augmenter, tandis que ledit embrayage (C) est débrayé, la force d'application dudit embrayage (C) pour embrayer ledit embrayage (C), si l'état d'arrêt du véhicule n'est pas détecté par lesdits moyens de détection d'état d'arrêt (101), et pour augmenter la force d'application dudit embrayage (C), indépendamment du signal venant desdits moyens de détection d'état d'arrêt (101), pour embrayer ledit embrayage (C), si la vitesse de rotation du moteur détectée par lesdits moyens de détection de vitesse de rotation du moteur (49) dépasse ladite vitesse de rotation du moteur finale.

2. Un dispositif de commande pour une transmission automatique selon la revendication 1, dans lequel lesdits moyens de débrayage (103) diminuent graduellement la force d'application dudit embrayage (C) si l'état d'arrêt du véhicule est détecté par ledit moyen de détection d'état d'arrêt (101), pour faire graduellement passer ledit embrayage (C) d'un état embrayé à un état débrayé et dans lequel lesdits moyens de fixation (105) fixent la vitesse de rotation du moteur, tandis que ledit embrayage (C) est passé de l'état embrayé à l'état débrayé, à la valeur de ladite vitesse de rotation du moteur initiale.

3. Un dispositif de commande pour une transmission automatique selon la revendication 1 ou 2,
dans lequel lesdits moyens de fixation (105) fixent la vitesse de rotation du moteur maximale jusqu'à écoulement d'un temps fixé, après que l'établissement de l'état débrayé dudit embrayage (C) ait commencé sous l'action desdits moyens de débrayage (103), à la valeur de ladite vitesse de rotation du moteur initiale.
